# EUROPÄISCHE PATENTANMELDUNG

(11) **EP 2 194 255 A2**
(43) Veröffentlichungstag der Anmeldung: **09.06.2010**
(21) Anmeldenummer: 09175510.8
(22) Anmeldetag: 10.11.2009
(51) Int. Cl.: F02C 6/20, F02K 3/062

(54) **Verfahren und Vorrichtung zum Betrieb eines mit Schubpropellern versehenen Turboprop-Flugtriebwerkes**

(30) Priorität: 05.12.2008 DE 102008060488
(71) Anmelder: Rolls-Royce Deutschland Ltd & Co KG, 15827 Blankenfelde-Mahlow (DE)
(72) Erfinder: Clemen, Carsten, 15749, Mittenwalde (DE)
(74) Vertreter: Wablat, Wolfgang

(57) **Zusammenfassung**

Die Erfindung bezieht sich auf ein Verfahren und eine Vorrichtung zum Betrieb eines mit Schubpropellern versehenen Turboprop-Flugtriebwerkes. Um die thermische Belastung der von der heißen Abgasströmung des Triebwerkes beeinträchtigten Schubpropeller zu vermindern und damit die Lebensdauer der Schubpropeller zu erhöhen, wird kalte Luft aus der Umgebung außerhalb des Flugtriebwerkes in die heiße, durch die Schubpropeller und deren Verbindungsstruktur hindurchströmende Abgasströmung geleitet und mit dieser vor Erreichen der Schubpropeller durch die heiße Abgasströmung gemischt.

## Beschreibung

Die Erfindung bezieht sich auf ein Verfahren und eine Vorrichtung zum Betrieb eines mit Schubpropellern versehenen Turboprop-Flugtriebwerkes.

Es sind mit Schubpropellern versehene Turboprop-Flugtriebwerke bekannt, deren Schubpropeller direkt mit der Power-Turbine verbunden sind. Bei diesen Turboprop-Flugtriebwerken muss die Power-Turbine sehr langsam drehen, um eine hohen Wirkungsgrad und eine geringe Lärmemission der Schubpropeller zu erreichen. Dies führt jedoch zu einem sehr geringen Wirkungsgrad der Turbine, zu einer sehr großen Turbine und damit zu einem großen Gewicht des Triebwerks und zu erhöhtem Treibstoffverbrauch. Um eine kleine Turbine mit gutem Wirkungsgrad zu erhalten, müssen die Schubpropeller schneller drehen, was jedoch zu sehr hohen Lärmemissionen und zu einem sehr geringen Wirkungsgrad der Schubpropeller und damit zu einem hohen Treibstoffverbrauch führt.

Die Schubpropeller werden daher über ein Getriebe mit der Turbine verbunden, um einen optimalen Wirkungsgrad beider Komponenten, d. h. der Turbine und der Schubpropeller, zu erreichen. Doch auch die Verwendung eines Getriebes hinter der Turbine hat große Nachteile. Diese bestehen darin, dass die heiße Abgasströmung des Triebwerkes durch die Schubpropeller hindurch strömt. Dies führt zu thermischer Belastung der Schubpropeller, welche die Gefahr der Materialermüdung und des Materialbruches in sich birgt. Außerdem erzeugt die heiße Abgasströmung unerwünschten Lärm.

Es ist bekannt, bei einer Power-Turbine die Schubpropeller so mit dem Getriebe zu verbinden, dass die Schubpropeller außerhalb des Kernstromes der Power-Turbine angeordnet sind. Jedoch befindet sich die Verbindungsstruktur von Schubpropellern und Getriebe im Abgaskanal. Hierbei fließt die heiße Abgasströmung durch einen gegenläufig rotierenden Kanal, in dem die Propellernaben rotieren. Die rotierenden Teile sind auch hier der sehr hohen Temperatur der Abgasströmung ausgesetzt, was zu Problemen bezüglich der Materialfestigkeit, Materialausdehnung und Abdichtung der rotierenden Bauteile führt. Außerdem liegt das Getriebe direkt unter dem von der heißen Abgasströmung durchströmten Kanal, was zu einem erhöhten Kühlungsbedarf des Getriebes führt. Dies erhöht den Ölbedarf des Getriebes und reduziert den Wirkungsgrad des Getriebes, was wiederum zu einem erhöhten Treibstoffverbrauch führt.

Der Erfindung liegt die Aufgabe zugrunde, diese Nachteile des Standes der Technik zu vermeiden.

Zur Lösung dieser Aufgabe sieht die Erfindung ein Verfahren zum Betrieb eines mit Schubpropellern versehenen Turboprop-Flugtriebwerkes vor, gemäß welchem kalte Luft aus der Umgebung außerhalb des Flugtriebwerkes in die heiße, durch die Schubpropeller und deren Verbindungsstruktur hindurch strömende Abgasströmung geleitet und mit dieser vor dem Erreichen der Schubpropeller und der Verbindungsstruktur von Schubpropellern und Getriebe durch die heiße Abgasströmung gemischt wird. Dies führt zu einer thermischen Entlastung der von der nun abgekühlten Abgasströmung durchströmten Schubpropeller und der Verbindungsstruktur von Schubpropellern und Getriebe, wodurch die Gefahr der Materialermüdung und des Materialbruches erheblich reduziert und schließlich die Lebensdauer der Schubpropeller und deren Verbindungsstruktur zum Getriebe erheblich erhöht wird. Auch erzeugt die erheblich abgekühlte Abgasströmung keinen unerwünschten Lärm mehr. Ferner ist kein erhöhter Kühlungsbedarf für das Getriebe erforderlich. Schließlich wird der Wirkungsgrad der Turbine und der Schubpropeller erheblich erhöht.

Weitere vorteilhafte Verfahrensschritte ergeben sich aus den Unteransprüchen. Die Durchflussgeschwindigkeit der heißen Abgasströmung des Flugtriebwerkes wird in der Abgasströmung beschleunigt. Um den statischen Druck im Strömungskanal soweit abzusenken, dass der Druckunterschied zwischen Kanal und Außenströmung so groß wird, dass die kalte Luft aus der Umgebung in den Kanal gesogen wird. Nach der Zuführung der kalten Luft aus der Umgebung wird die Strömung wieder verzögert. Die Zufuhr der kalten Luft aus der Umgebung erfolgt unter einem in Strömungsrichtung der heißen Abgasströmung gerichteten Einströmwinkel und die kalte Luft wird aus der Umgebung vor dem Einleiten in die heiße Abgasströmung durch einen geeignet geformten Kanal (z.B. gerade, s-förmig, usw.) geleitet.

Zur weiteren Lösung der Aufgabe sieht die Erfindung ferner eine Vorrichtung zur Durchführung des Verfahrens zum Betrieb eines mit Schubpropellern versehenen Turboprop-Flugtriebwerkes mit einer Triebwerksgondel vor, wobei in Strömungsrichtung der heißen Abgasströmung des Triebwerkes am hinteren Ende der nicht drehenden Triebwerksgondel und vor den Schubpropellern mindestens ein Kanal zur Zuführung kalter Luft aus der Umgebung in die im Abgaskanal strömende heiße Abgasströmung angeordnet ist. Auch hiermit werden die oben zum erfindungsgemäßen Verfahren beschriebenen Vorteile erreicht.

Weitere vorteilhafte Vorrichtungsmerkmale ergeben sich aus den Unteransprüchen, wonach der mindestens eine Kanal als eine das freie Ende der nicht drehenden Triebwerksgondel umgebende Kanalanordnung ausgebildet und die Kanalanordnung unter einem in Strömungsrichtung der heißen Abgasströmung im Abgaskanal gerichteten Einströmwinkel angeordnet und als geeignet geformter Kanal (z.B. gerade, s-förmig, usw.) ausgebildet ist.

Das erfindungsgemäße Verfahren zum Betrieb eines mit Schubpropellern versehenen Turboprop-Flugtriebwerkes wird nachfolgend anhand einer erfindungsgemäßen, in den nachfolgenden Figuren dargestellten Vorrichtung zur Durchführung des Verfahrens näher erläutert. Es zeigt:
- Fig. 1 und 2: prinzipielle Längsschnitte durch Turbofan- Triebwerke gemäß dem Stand der Technik,
- Fig. 3 und 4: prinzipielle Längsschnitte durch Turboprop- Triebwerke gemäß dem Stand der Technik,
- Fig. 5: einen prinzipiellen Längsschnitt durch ein Turboprop-Triebwerk, in der oberen Hälfte gemäß der Erfindung und in der unteren Hälfte gemäß dem Stand der Technik nach Fig. 4, untere Hälfte, und
- Fig. 6 bis 8: vergrößerte Detaildarstellungen des rechten oberen Teils der Fig. 5.

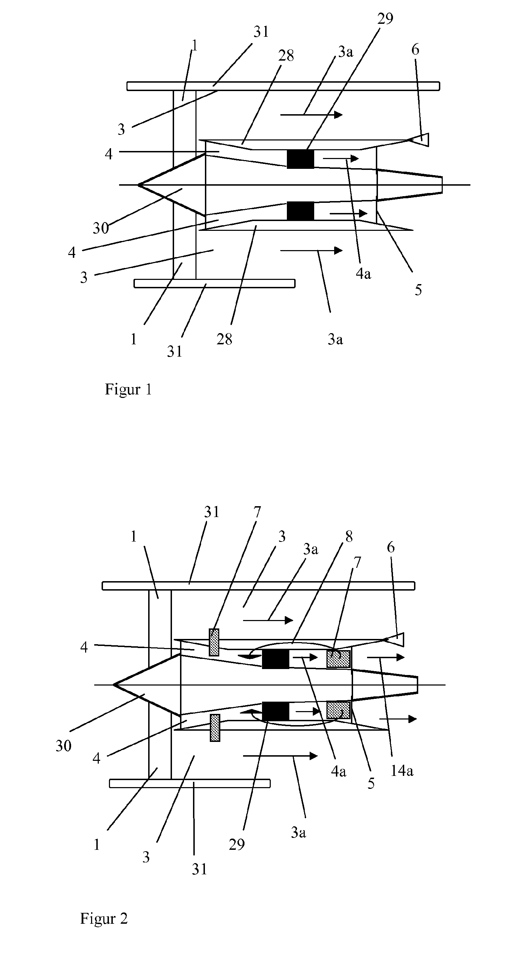

Die Fig. 1 zeigt in der oberen Hälfte ein Turbofan-Triebwerk gemäß dem Stand der Technik mit Triebwerkswelle 30, Bläser (Fan) 1, feststehender Triebwerksgondel 31, Nebenstromkanal 3 mit Nebenstrom 3a, feststehender Kernstromverkleidung 28, Kernstromkanal 4, Brennkammer 29, Turbine 5 und Mischer 6 für die Vermischung des Kernstroms 4a und des Nebenstroms 3a (gemischter Jet). Die Fig. 1 zeigt in der unteren Hälfte ein Turbofan-Triebwerk mit Bläser (Fan) 1, Triebwerksgondel 31, Nebenstromkanal 3, Kernstromkanal 4 und Turbine 5 ohne einen Mischer, d. h. ohne eine Vermischung von Neben- und Kernstrom 3a bzw. 4a.

Die Fig. 2 zeigt die gleiche Konfiguration eines Turbofan-Triebwerks wie in Fig. 1, jedoch mit Wärmetauschern 7 im Kernstromkanal 4 und einem Rekuperator 8 als Wärmetauscher im Kernstromkanals 4, der die Wärme aus dem Abgasstrom 14a der Turbine 5 zurück in den Kernstrom 4a im Kernstromkanal 4 vor der Brennkammer 29 leitet (Intercooled-Recuperative-Concept).

Im Unterscheid zu den in den Fig. 1 und 2 dargestellten Turbofan-Triebwerken mit äußerer Triebwerksgondel 31 und innengelegener Kernstromverkleidung 28 umfassen die nachstehend beschriebenen Turboprop-Triebwerke nur die äußere Triebwerks-gondel 2, die zugleich die Funktion einer Kernstromverkleidung hat.

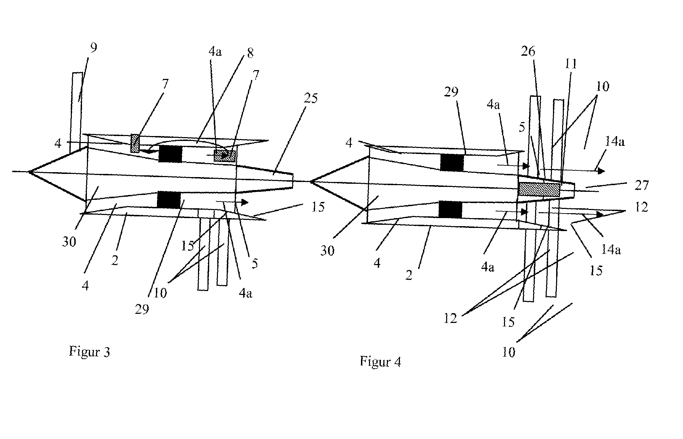

Die Fig. 3 zeigt in der oberen Hälfte ein Turboprop-Triebwerk mit einem Zugpropeller 9 an der Triebwerkswelle 30 und einem Kernstrom 4a im Kernstromkanal 4. Zusätzlich kann dieses Turboprop-Triebwerk auch mit Wärmetauschern 7 und/oder einem Rekuperator 8 als Wärmetauscher im Abgassystem der Brennkammer 29 ausgestattet sein. Die Fig. 3 zeigt in der unteren Hälfte ein Turboprop-Triebwerk mit Kernstrom 4a im Kernstromkanal 4 und mit zwei an gegenläufigen Propellernaben 15 angeordneten Schubpropellern 10, die direkt mit der Power-Turbine 5 verbunden sind und sich somit vor dem Abgassystem befinden. Das Abgassystem ist hier analog dem in Fig. 1, untere Hälfte, ausgebildet. Am Ende der Triebwerkswelle 30 befindet sich die hier von den Schubpropellern 10 nicht beanspruchte Rotornabe 25.

Die Fig. 4 zeigt wiederum die Konfiguration eines Turboprop-Triebwerkes mit Schubpropellern 10 und Kernstrom 4a im Kernstromkanal 4. Bei diesem Turboprop-Triebwerk sind die Schubpropeller 10 jedoch über ein Getriebe 11 mit der Power-Turbine 5 verbunden und gegenläufig rotierenden Propellernaben 26, 27 am Ende der Triebwerkswelle 30 zugeordnet. Bei dem in der oberen Hälfte dargestellten Triebwerk sind die Schubpropeller 10 mit den gegenläufig rotierenden Propellernaben 26, 27 und damit mit dem Getriebe 11 so verbunden, dass der Abgasstrahl, d. h. die heiße Abgasströmung 14a des Kernstroms 4a, unmittelbar durch die Schubpropeller 10 strömt. Bei dem in der unteren Hälfte dargestellten Triebwerk sind die Schubpropeller 10 so angeordnet, dass diese wie bei dem Triebwerk nach Fig. 3, untere Hälfte, außerhalb des Kernstroms 4a im Kernstromkanal 4 angeordnet sind. Die Verbindungsstruktur 12 von Schubpropellern 10 und Getriebe 11 befindet sich jedoch im Abgaskanal 14, d. h. im Kernstromkanal 4, mit der heißen Abgasströmung 14a. Die Verbindungsstruktur 12 zwischen den Schubpropellern 10 bzw. deren gegenläufig rotierenden Propellernaben 25 und den das Getriebe 11 ummantelnden Propellernaben 26, 27 besteht aus in Verlängerung der Schubpropeller 10 angeordneten Verbindungsmitteln, wie z. B. nicht dargestellten Bolzen, und einer diese ummantelnden aerodynamischen Verkleidung.

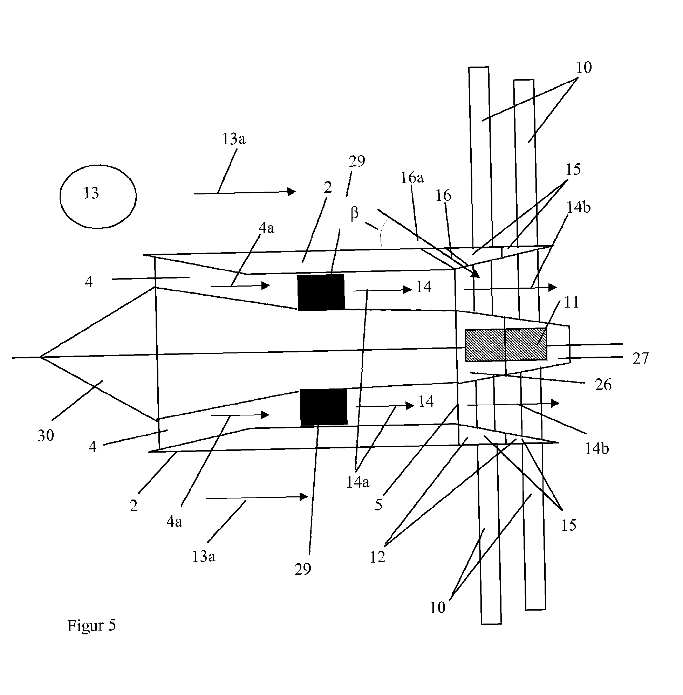

Die erfindungsgemäße Vorrichtung bezieht sich lediglich auf die Anwendung bei Turboprop-Triebwerken, deren Stand der Technik in den Fig. 3 und 4 dargestellt ist. Im speziellen bezieht sich die erfindungsgemäße Vorrichtung auf Konfigurationen von Turboprop-Flugtriebwerken mit Schubpropellern 10, wie es in Fig. 3, untere Hälfte, und Fig. 4 dargestellt ist. Die erfindungsgemäße Vorrichtung nutzt die Vorteile der Konfiguration des Turboprop-Flugtriebwerkes nach Fig. 4, untere Hälfte, und behebt deren Nachteile. Die Konfiguration gemäß Fig. 4 untere Hälfte, findet sich auch in Fig. 5, untere Hälfte, wieder. Gegenübergestellt ist in Fig. 5, obere Hälfte, die erfindungsgemäße Vorrichtung. Diese zeichnet sich dadurch aus, dass Luft als Außenströmung 13a aus der Umgebung 13 außerhalb der Triebwerkszelle (Triebwerksgondel 2) in den Abgaskanal 14 geleitet wird. Diese kalte Luft kühlt den Abgasstrahl bzw. die Abgasströmung 14a ab. Damit sind die Nachteile bezüglich Materialfestigkeit, Materialausdehnung, Abdichtung der Anordnung, erhöhtem Kühlungsbedarf des Getriebes 11 und reduziertem Getriebewirkungsgrad behoben. Die Ausgestaltung und Funktionsweise der erfindungsgemäßen Vorrichtung eines Abgaskühlsystems wird im Folgenden beschrieben.

Die Fig. 5 zeigt in der oberen Hälfte einen Kühlluftkanal 16 zwischen dem hinteren Ende der feststehenden Triebwerksgondel 2 und der daran anschließenden, gegen-läufig drehenden Propellernaben 15 mit den Schubpropellern 10. Der Kühlluftkanal 16 ist unter einem in Strömungsrichtung der heißen Abgasströmung 14a im Kernstromkanal 4 gerichteten Einströmwinkel β ausgerichtet. Durch den Kühlluftkanal 16 wird ein Kühlluftstrom 16a von kalter Zuluft aus der Außenströmung 13a in der Umgebung 13 der Abgasströmung 14a dem Kernstromkanal 4 bzw. dem Abgaskanal 14 zugeführt, mit der heißen Abgasströmung 14a gemischt und als gekühlte Abgasströmung 14b im Abgaskanal 14 aus dem Triebwerk abgeführt. Dabei passiert nur die gekühlte Abgasströmung 14b den Bereich der Schubpropeller 10 bzw. der Verbindungsstruktur 12 zwischen den Schubpropellern 10 und dem Getriebe 11. Der Kühlluftkanal 16 umgibt ringförmig die gesamte Triebwerksgondel 2 und bildet somit eine Kanalanordnung.

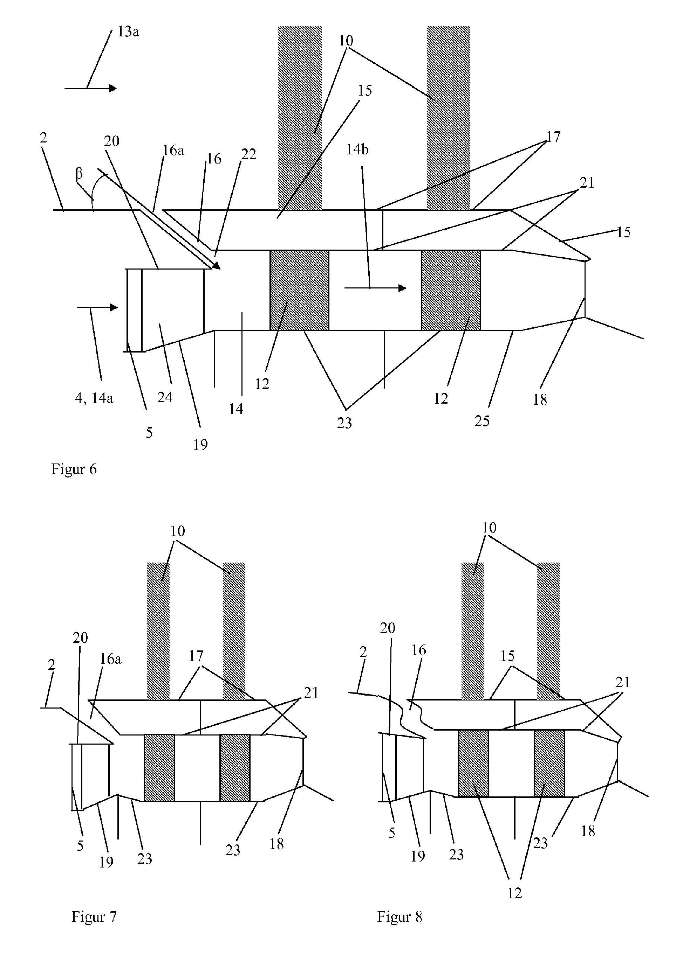

In der Fig. 6 ist die prinzipielle Funktionsweise der Vorrichtung bzw. des Abgaskühlsystems dargestellt. Die heiße Luft, d. h. der heiße Kernstrom 4a im Kernstromkanal 4 aus der Turbine 5, wird in dem sich düsenartig verengenden Kanal 24 zwischen der ruhenden, nicht drehenden Nabe 19 am rückwärtigen Ende der Triebwerkswelle 30 und dem ruhenden, nicht drehenden Gehäuse 20 der Triebwerksgondel 2 geformt und zwischen der nicht drehenden Nabe 19 und dem nicht drehenden Gehäuse 20 beschleunigt, um den statischen Druck abzusenken. Die Verengung des Kanals 24 kann durch eine Neigung der unteren, der oberen oder beider Kanalwände 21, 23 erreicht werden. Die Verlegung des Kanals 24 und die damit verbundene Absenkung des statischen Drucks im Kanal 24 führt dazu, dass der Druckunterschied zwischen Kanal 24 und Außenströmung 13a so groß wird, dass dadurch die kalte Zuluft, d. h. der kalte Zuluftstrom 16a, durch den geeignet positionierten und dimensionierten Kühlluftkanal 16 aus der Außenströmung 13a in der Umgebung dem Abgaskanal 14 für die Abgasströmung 14a zugeführt wird. Die Abnahmestelle der Kühlluft 16a aus der Umgebungsluft liegt an einer beliebigen Position zwischen der Triebwerksspitze, d. h. dem hinteren Ende der nicht drehenden Triebwerksgondel 2 und dem ersten Schubpropeller 10 auf der drehenden Propellernabe 15. Die Zuführungsstelle 22 für die kalte Luft in den Abgaskanal 14 befindet sich stromab der Turbine 5 und stromauf des ersten Schubpropellers 10 bzw. der Verbundstruktur 12 aus Schubpropeller 10 und Getriebe 11 und trennt die stehende Triebwerksgondel 2 von der sich drehenden Propellergondel 17 bzw. den Propellernaben 15. An der Zuführungsstelle 22 weitet sich der Abgaskanal 14 für den Abgasstrom 14a entsprechend der zugeführten Luftmenge auf, um die Durchflussgeschwindigkeit durch den Abgaskanal 14 zu verringern. Die Aufweitung kann entweder an der oberen Kanalwand 21, der unteren Kanalwand 23 oder beiden Kanalwänden 21, 23 erfolgen. Das heiße und kalte Fluid durchströmt den Abgaskanal 14 und tritt durch eine Düse 18 in die Umgebung aus. Durch geeignete Formgebung der rotierenden Propellernaben 15 sowie der oberen und unteren Kanalwände 21, 23kann die Vermischung der kalten Zuluft des Kühlluftstromes 16a mit der heißen Abgasströmung 14a im Abgaskanal 4 effektiv gestaltet werden.

Die Fig. 7 und 8 zeigen Sonderformen des Kühlluftkanals 16. Dieser kann gemäß Fig. 7 in Richtung des Kühlluftstromes 16a düsenartig verengt oder gemäß Fig. 8 als S-förmige Kanalanordnung ausgebildet sein.

Die Anwendung der erfindungsgemäßen Abgaskühlung führt dazu, dass der Abgasstrahl bzw. die Abgasströmung 14a in Abhängigkeit des Kühlluftstromes 16 deutlich abgekühlt werden kann (bei zum Beispiel 60% Kühlluftmassenstrom bezogen auf den Turbinen-Austrittsmassenstrom ergibt sich eine Abkühlung um 25% bzw. 200 K). Das bedeutet, dass die Bauteile im Abgaskanal 14 stromab der Power-Turbine 5, das sind insbesondere die beiden rotierenden Propellernaben 15 und die Außenwand des Getriebes 11 wesentlich kälter umströmt werden als es ohne die Kühlluft der Fall wäre. Dadurch kann für die Ummantelung der Propellernaben 15 und des Getriebes 11 ein kostengünstigeres und leichteres Material verwendet werden, da die Materialbeanspruchung (Materialfestigkeit und Materialausdehnung) sinkt. Das Getriebe 11 kann mit einer geringeren Menge an Kühlung, d.h. Getriebeöl, auskommen, der Getriebeverschleiß verringert sich und der Getriebewirkungsgrad erhöht sich. Die Abgastemperatur sinkt, d. h., dass die Mischungsverluste, die bei der Vermischung der Abgasströmung 14a mit der Umgebungsluft 13a entstehen, kleiner werden. Diese Effekte kombiniert führen zu geringeren Materialkosten, geringerem Triebwerksgewicht, geringerem Verschleiß und geringerem Treibstoffverbrauch und damit zu geringeren Herstellungs-, Wartungs- und Betriebskosten.

Im Übrigen ist ein ungekühltes System gemäß dem Stand der Technik aufgrund der beschriebenen Nachteile in der Praxis kaum realisierbar, so dass gezwungenermaßen das gekühlte System gemäß der Erfindung eingesetzt werden muss, wenn das Prinzip des Schubpropellers mit Getriebe und im Abgasstrahl liegenden Rotornaben verwirklicht werden soll.

### Bezugszeichenliste

- 01: Bläser (Fan)
- 02: Triebwerksgondel
- 03: Nebenstromkanal
- 03a: Nebenstrom
- 04: Kernstromkanal
- 04a: Kernstrom
- 05: Turbine
- 06: Mischer
- 07: Wärmetauscher
- 08: Rekuperator (Wärmetauscher)
- 09: Zugpropeller
- 10: Schubpropeller
- 11: Getriebe
- 12: Verbindungsstruktur
- 13: Umgebung
- 13a: Außenströmung
- 14: Abgaskanal
- 14a: Abgasströmung, heiß
- 14b: Abgasströmung, gekühlt
- 15: Propellernabe
- 16: Kühlluftkanal
- 16a: Kühlluftstrom, kalte Luft
- 17: Propellergondel
- 18: Düse
- 19: Nabe, ruhend
- 20: Gehäuse, ruhend
- 21: Kanalwand (obere)
- 22: Zuführungsstelle
- 23: Kanalwand (untere)
- 24: Kanal
- 25: Rotornabe
- 26: Propellernabe
- 27: Propellernabe
- 28: Kernstromverkleidung
- 29: Brennkammer
- 30: Triebwerkswelle
- 31: Triebwerksgondel
- β: Einströmwinkel

## Patentansprüche

1. Verfahren zum Betrieb eines mit Schubpropellern versehenen Turboprop-Flugtriebwerkes, **dadurch gekennzeichnet, dass** kalte Luft aus der Umgebung außerhalb des Flugtriebwerkes in die heiße, durch die Schubpropeller und deren Verbindungsstruktur hindurchströmende Abgasströmung geleitet und mit dieser vor dem Erreichen der Schubpropeller und deren Verbindungsstruktur durch die heiße Abgasströmung gemischt wird.

2. Verfahren nach Anspruch 1, **dadurch gekennzeichnet, dass** die Durchflussgeschwindigkeit der heißen Abgasströmung des Flugtriebwerkes zur Absenkung des statischen Druckes in der Abgasströmung beschleunigt und nach Zuführung der kalten Luft aus der Umgebung wieder verzögert wird.

3. Verfahren nach Anspruch 1 oder 2, **dadurch gekennzeichnet, dass** die Zufuhr der kalten Luft aus der Umgebung unter einem in Strömungsrichtung der heißen Abgasströmung gerichteten Einströmwinkel erfolgt.

4. Verfahren nach einem der Ansprüche 1 bis 3, **dadurch gekennzeichnet, dass** die kalte Luft aus der Umgebung vor dem Einleiten in die heiße Abgasströmung S-förmig geleitet wird.

5. Vorrichtung zur Durchführung des Verfahrens nach Anspruch 1 für ein Triebwerk mit einer Triebwerksgondel, **dadurch gekennzeichnet, dass** in Strömungsrichtung der heißen Abgasströmung (14a) des Triebwerkes am hinteren Ende der nicht drehenden Triebwerksgondel (2) und vor den Schubpropellern (10) und deren Verbindungsstruktur (12) mindestens ein Kühlluftkanal (16) zur Zuführung kalter Luft aus der Umgebung (13) in die heiße Abgasströmung (14a) angeordnet ist.

6. Vorrichtung nach Anspruch 5, **dadurch gekennzeichnet, dass** der mindestens eine Kühlluftkanal (16) als eine das freie Ende der nicht drehenden Triebwerksgondel (2) ringförmig umgebende Kanalanordnung ausgebildet ist.

7. Vorrichtung nach Anspruch 5 oder 6, **dadurch gekennzeichnet, dass** der Kühlluftkanal (16) und die Kanalanordnung unter einem in Strömungsrichtung der heißen Abgasströmung (14a) gerichteten Einströmwinkel (β) angeordnet sind.

8. Vorrichtung nach einem der Ansprüche 5 bis 7, **dadurch gekennzeichnet, dass** der Kühlluftkanal (16) und die Kanalanordnung S-förmig ausgebildet sind.
